# DEMANDE DE BREVET EUROPEEN

(11) **EP 0 624 515 A1**
(43) Date de publication de la demande: **17.11.1994**
(21) Numéro de dépôt: 94400807.7
(22) Date de dépôt: 13.04.1994
(51) Int. Cl.: B64D 25/04

(54) **Piètement pour siège d'appareil de transport aérien et siège comportant un tel piètement**

(30) Priorité: 14.05.1993 FR 9305866
(71) Demandeur: SOCIETE INDUSTRIELLE ET COMMERCIALE DE MATERIEL AERONAUTIQUE (SICMA) SOCIETE ANONYME, F-36100 Issoudun (FR)
(72) Inventeur: Marechal, Robert René, F-75116 Paris (FR)
(74) Mandataire: Schulz, Jean-Alain

(57) **Abrégé**

l'invention concerne un piètement pour siège d'appareil de transport aérien comprenant une base triangulaire (1) définissant un ancrage avant (2), un ancrage arrière (3), et un sommet intermédiaire (4) surélevé, et un pied (5) associé par son extrémité supérieure (6) à la structure du siège et associé par son extrémité inférieure (7) à la base triangulaire (1). Selon l'invention, le pied (5) est associé rigidement à la base (1) par des moyens (8) d'association rigide qui réalisent, en utilisation normale du siège, un maintien positif du pied (5) par rapport à la base (1) empêchant notamment tout pivotement du pied (5) vers l'avant ou vers l'arrière.

## Description

L'invention concerne un piètement pour siège d'appareil de transport aérien (notamment pour avion de ligne), du type comprenant une base triangulaire définissant un ancrage avant, un ancrage arrière et un sommet intermédiaire surélevé, et un pied (qui est généralement le pied arrière) associé par son extrémité supérieure à la structure du siège, généralement à l'assise, et associé par son extrémité inférieure à la base triangulaire, généralement au sommet de cette base.

On connaît déjà du brevet américain US-A-4 911 381 un tel piètement. Ce document est incorporé par référence à la présente description, seules les caractéristiques propres à l'invention étant décrites en détail.

Ces piètements connus ont l'avantage de procurer un meilleur comportement dans le cas d'une très forte décélération, par exemple due à un écrasement au sol. Le dispositif d'absorption d'énergie relie la partie supérieure du pied avant au sommet de la base triangulaire pour maintenir les positions relatives des pieds en utilisation normale, vont en autorisant un mouvement relatif générant l'absorption d'énergie en cas de choc violent.

Néanmoins, dans ces piètements connus, il n'est pas aisé d'adapter la valeur du seuil de déclenchement de l'absorbeur d'énergie en fonction de l'utilisation du piètement (poids du siège à supporter, nombre de places assises, position du piètement par rapport au plancher de l'appareil et aux places assises...).

En effet, les dispositifs d'absorption d'énergie généralement utilisés ont des caractéristiques standard qui ne peuvent pas être modifiées pour choisir la quantité d'énergie pouvant être absorbée dans une plage de valeur importante et avec précision.

De plus, le piètement ainsi réalisé est lourd et nécessite un grand nombre de pièces à fabriquer et à monter. Plus particulièrement, si l'on souhaite modifier les caractéristiques du dispositif d'absorption d'énergie, il est indispensable de modifier corrélativement les dimensions, les positions relatives, et les différents élements constitutifs du piètement. En effet, les points d'ancrage, les dimensions en longueur et l'encombrement du dispositif d'absorption d'énergie seront généralement modifiés en fonction de la valeur de l'énergie à absorber. Il faut ainsi, pratiquement concevoir un piètement spécifique en fonction de chaque dispositif d'absorption d'énergie utilisé.

L'invention vise à pallier ces inconvénients en proposant un piètement dont la capacité à absorber de l'énergie peut être modifiée et adaptée aux conditions d'utilisation du piètement de façon simple, rapide, et peu onéreuse. Plus particulièrement, l'invention vise à proposer un tel piètement avec lequel cette modification est possible sans que les positions relatives et, les formes et les dimensions des éléments constitutifs du piètement lui-même ne soient modifiés.

L'invention a également pour objet de proposer un piètement qui présente les mêmes avantages que les piètements connus mentionnés ci-dessus, mais qui soit plus léger et, de fabrication et de montage particulièrement simples.

L'invention vise également à proposer un tel piètement qui absorbe l'énergie lors d'un choc avec un pivotement du pied avant limité à une valeur maximum prédéterminée.

L'invention vise également à proposer un tel piètement qui soit susceptible de satisfaire aux essais dynamiques, notamment de type "16g" imposés par les normes internationales de l'aviation civile ou plus sévère.

Pour ce faire, l'invention concerne un piètement pour siège d'appareil de transport aérien comprenant une base triangulaire définissant un ancrage avant, un ancrage arrière, et un sommet intermédiaire surélevé, et un pied associé par son extrémité supérieure à la structure du siège et associé par son extrémité inférieure à la base triangulaire, caractérisé en ce que le pied est associé rigidement à la base par des moyens d'association rigide qui réalisent, en utilisation normale du siège (c'est-à-dire en l'absence d'une décélération susceptible de déclencher l'absorption d'énergie), un maintien positif du pied par rapport à la base empêchant notamment tout pivotement du pied vers l'avant ou vers l'arrière.

Ainsi, dans un piètement selon l'invention, la fonction d'absorption d'énergie est séparée de la fonction de maintien de la forme générale du piètement en utilisation normale. Et contrairement à l'art antérieur dans lequel le dispositif d'absorption d'énergie était utilisé à la fois pour maintenir en position les différents éléments constitutifs du piètement généralement articulés entre eux et/ou à la structure du siège, et pour réaliser l'absorption d'énergie, en cas de décélération importante.

Selon l'invention, les moyens d'association rigide du pied à la base comprennent des moyens d'absorption d'énergie actifs lorsque le siège subit une décélération tendant à faire pivoter le pied vers l'avant au delà d'une valeur prédéterminée. Les moyens d'absorption d'énergie comprennent au moins une portion du pied et/ou de la base déformable plastiquement à partir d'une valeur prédéterminée de la décélaration - notamment une portion de l'extrémité inférieure du pied déformable plastiquement. Les moyens d'absorption d'énergie comprennent plus particulièrement un dispositif d'absorption d'énergie par flambage formé d'au moins une portion du pied et/ou de la base.

Par ailleurs, selon l'invention, les moyens d'absorption d'énergie comprennent un dispositif d'absorption d'énergie complémentaire rapporté sur et associé interposé entre le pied et la base. Le dispositif d'absorption d'énergie est associé à l'arrière et au voisinage de l'extrémité inférieure du pied. Il comprend une pièce mâle pénétrant à force avec déformation plastique dans un évidement d'une pièce femelle ; l'une des pièces femelle ou mâle est directement rapportée sur et associée au pied, et l'autre pièce mâle ou femelle est directement rapportée sur et associée à la base. L'évidement comporte une extrémité formant butée de fin de course pour la pièce mâle limitant l'amplitude du mouvement du pied par rapport à la base. La pièce femelle peut être constituée d'une simple plaque en matériau à haut module d'élasticité, notamment en acier.

L'invention concerne également un piètement comportant en combinaison tout ou partie des caractéristiques mentionnées ci-dessus ou ci-après.

D'autres caractéristiques et avantages de l'invention apparaîtront à la lecture de la description suivante qui se réfère aux figures annexées dans lesquelles :
- la figure 1 est une vue de profil schématique d'un piètement de siège selon l'invention en position normale d'utilisation ;
- la figure 2 est une vue de profil schématique du piètement de la figure 1 en position accidentée ;

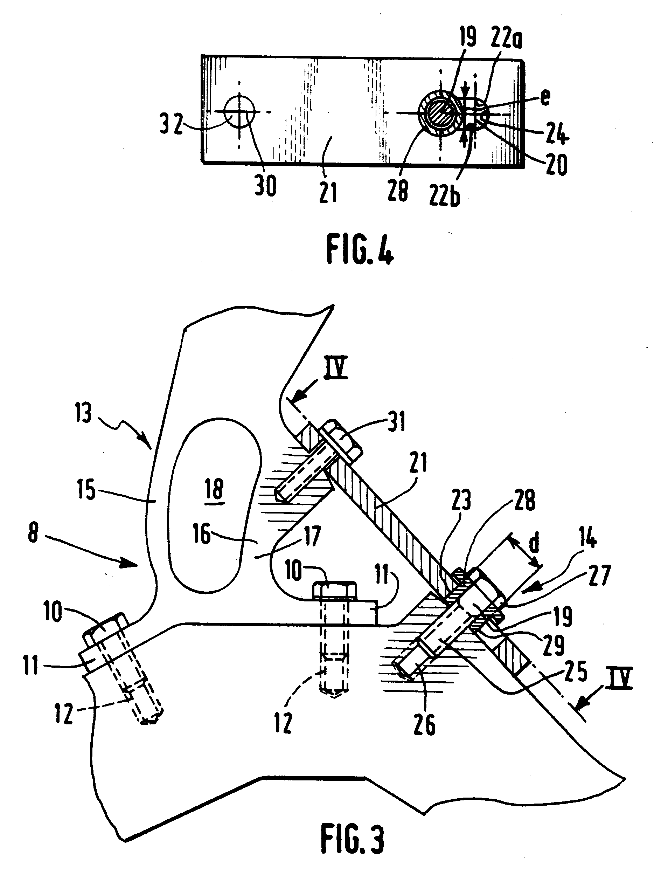

- la figure 3 est une vue schématique de détail de l'association entre le pied et la base triangulaire d'un piètement de siège selon l'invention ;
- la figure 4 est une vue selon la ligne IV-IV de la figure 3.

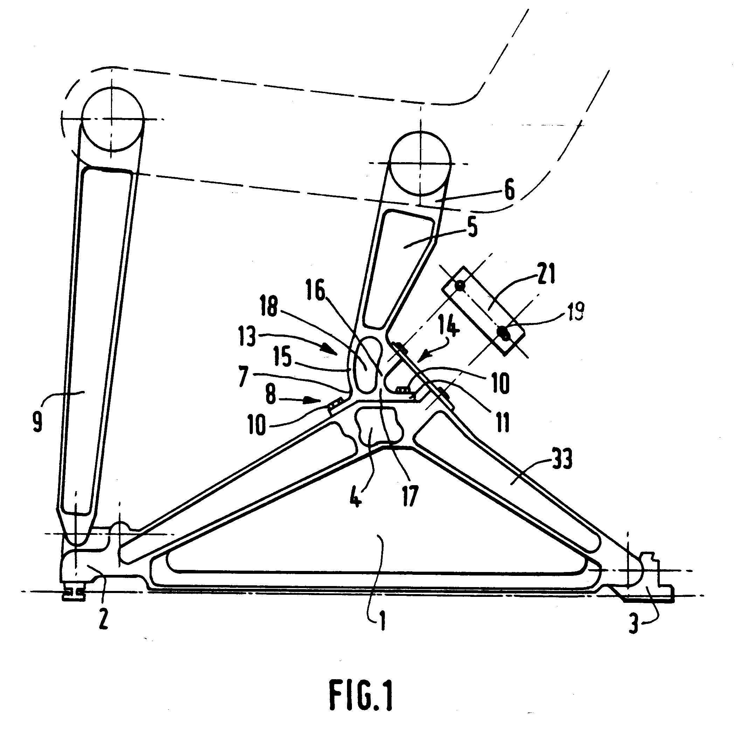

L'invention concerne un piètement pour siège d'appareil de transport aérien comportant une base triangulaire 1 définissant un ancrage avant 2, un ancrage arrière 3, et un sommet intermédiaire 4 surélevé, et un pied 5 associé par son extrémité supérieure 6 articulée à la structure du siège (représentée en traits mixtes pointillés à la figure 1) et associé par son extrémité inférieure 7 à la base triangulaire 1.

Les caractéristiques générales d'un tel piètement sont déjà connus du brevet américain US-A-4 911 381 incorporé par référence à la présente description.

Selon l'invention, le pied 5 est associé rigidement à la base 1 par des moyens 8 d'association rigide qui réalisent, en utilisation normale du siège, un maintien positif du pied 5 par rapport à la base 1 empêchant notamment tout pivotement de ce pied 5 vers l'avant ou vers l'arrière. Généralement et dans le mode de réalisation représenté, le pied 5 est le pied arrière, et un pied avant 9 s'étend à partir de l'ancrage avant 2.

Le pied 5 est associé rigidement à la base 1 en ce sens qu'il est normalement porté et maintenu par rapport à la base 1 dès lors qu'il est relié à cette base 1. Ainsi, le pied 1 peut être rapporté sur la base 1 par des moyens 8 d'association rigide comprenant par exemple des vis 10 serrant une platine 11 vers l'extrémité inférieure 7 du pied 5 dans des taraudages 12 du sommet 4 comme représenté.

En variante non représentée, on peut néanmoins prévoir par exemple que le pied 5 soit formé d'une seule pièce avec la base 1. D'autre mode d'association rigide du pied 5 par rapport à la base 1 sont possibles. Le pied 5 est généralement, de préférence et selon l'invention associé à la base 1 au moins sensiblement au voisinage du sommet 4 intermédiaire surélevé.

Selon l'invention, les moyens 8 d'association rigide du pied 5 à la base 1 comprennent des moyens 13, 14 d'absorption d'énergie actifs lorsque le siège subi une décélération tendant à faire pivoter le pied 5 vers l'avant au delà d'une valeur prédéterminée. Les moyens 13, 14 d'absorption d'énergie comprennent un dispositif d'absorption d'énergie 13 par flambage d'au moins une portion 15, 16 du pied 5 et/ou de la base 1. Les moyens 13, 14 d'absorption d'énergie comprennent en outre un dispositif d'absorption d'énergie 14 complémentaire rapporté sur, associé à et interposé entre le pied 5 de la base 1.

Selon l'invention, les moyens 13, 14 d'absorption d'énergie comprennent donc au moins une portion 15, 16 du pied 5 et/ou de la base 1 déformables plastiquement à partir d'une valeur prédéterminée de décélération, et plus particulièrement au moins une portion 15, 16 de l'extrémité inférieure 7 du pied 5 déformable plastiquement. Les portions 15, 16 déformables plastiquement constituent le dispositif d'absorption d'énergie 13 par flambage.

Et plus précisément, les moyens 13, 14 d'absorption d'énergie comprennent une portion arrière 16 déformable plastiquement en flexion et une portion avant 15 déformable par flambage, lorsque le pied 5 est amené à pivoter vers l'avant à partir de sa position d'utilisation normale sous l'effet d'une décélération au delà d'une valeur prédéterminée.

La portion avant 15 est constituée d'une membrure convexe 15 à convexité orientée vers l'avant. La portion arrière 16 est constituée d'une membrure 16 convexe à convexité orientée vers l'avant. Mais cette portion arrière 16 comporte un retrécissement 17 déformable plastiquement en flexion réalisant un axe de pivotement horizontal transversal du pied 5 par rapport à la base 1 lorsque ladite valeur prédéterminée de la décélération est dépassée.

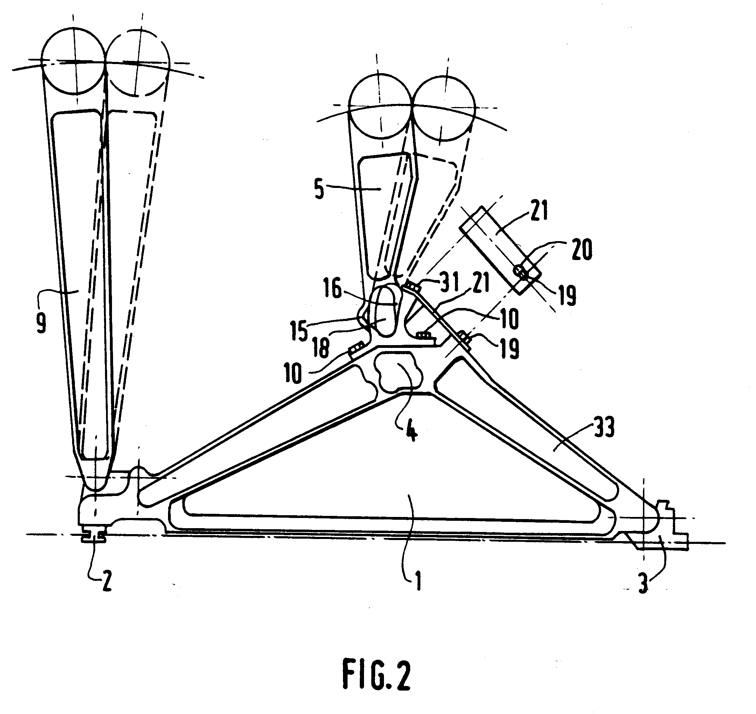

Pour former les portions 15, 16, avant et arrière constituant un dispositif d'absorption d'énergie par flambage 13 du piètement selon l'invention, le pied 5 et/ou la base 1 comporte une fenêtre transversale 18 ménagée au moins au voisinage de l'association du pied 5 à la base 1. Ainsi, les portions convexes 15, 16 constituent des portions fragilisées du pied 5 et/ou de la base 1 qui sont normalement rigides et conservent leur forme propre, mais, qui sous l'effet d'une décélération dépassant ladite valeur prédéterminée, se déforment plastiquement en flambage et flexion respectivement en absorbant de l'énergie. La portion avant 15 convexe arc-boutée subit une déformation par flambage extérieur vers l'avant, sa convéxité ayant une courbure qui diminue au cours du flambage. La portion arrière 16 formant le rétrécissement 17 subit une flexion vers l'avant dans le domaine plastique. Dans le mode de réalisation représenté sur les figures 1 et 2, la fenêtre 18 et les portions 15 et 16 sont ménagées à l'extrémité inférieure 7 du pied 5 immédiatement au dessus du sommet 4 de la base 1. La fenêtre 18 est au moins sensiblement en forme de haricot et débouche de chaque côté du pied 5. L'aspect déformé du dispositif d'absorption d'énergie 13 par flambage constitué par cette fenêtre 18 et les portions 15, 16 avant et arrière est représenté à la figure 2. La fenêtre 18 et les portions 15, 16 avant et arrière sont disposées immédiatement au dessus de la platine 11 de fixation de l'extrémité inférieure 7 du pied 5 sur la base 1.

Par ailleurs, un dispositif d'absorption 14 d'énergie complémentaire est rapporté sur, associé à et interposé entre le pied 5 et la base 1 à l'arrière et au voisinage de l'extrémité inférieure 7 du pied 5. Ce dispositif d'absorption d'énergie 14 complémentaire permet de compléter le dispositif 13 préalablement décrit et d'adapter de façon simple et peu coûteuse la capacité d'absorption d'énergie des moyens 13, 14 d'absorption d'énergie du piètement selon l'invention. Le dispositif d'absorption d'énergie 14 complémentaire comprend une pièce mâle 19 pénétrant à force avec déformation plastique dans un évidement 20 d'une pièce femelle 21. L'une 21 des pièces femelle 21 ou mâle est directement rapportée sur et associée au pied 5, alors que l'autre 19 pièce mâle ou femelle est directement rapportée et associée à la base 1. Chacune des pièces 19, 21 mâle et femelle est donc associée au contact de la base 1, respectivement du pied 5, sans élément de liaison intermédiaire.

Selon l'invention, la pièce mâle 19 a une forme extérieure globalement cylindrique de révolution et l'évidement 20 est constitué d'une lumière oblongue formant deux portées 22a, 22b en regard prolongeant radialement un perçage cylindrique 23 dans lequel la pièce mâle 19 est normalement (c'est à dire en position normale d'utilisation) engagée. L'axe de la pièce mâle 19 coincide, en position normale, avec l'axe du perçage 23 et est parallèle aux portées 22a, 22b. Le diamètre extérieur d de la pièce mâle 19 est supérieur à la largeur e de la lumière oblongue formant l'évidement 20, c'est à dire de la distance séparant les deux portées 22a, 22b parallèles de sorte qu'en action, c'est-à-dire lorsque la décélération dépasse ladite valeur prédéterminée, le dispositif 14 d'absorption d'énergie absorbe de l'énergie par déformation plastique des portées 22a, 22b écartées par l'introduction, entre elles, de la pièce mâle 19 lors de son mouvement perpendiculairement à son axe.

L'évidement 20 comporte une extrémité 24 formant butée de fin de course pour la pièce mâle 19 limitant l'amplitude du mouvement du pied 5 par rapport à la base 1. Cette extrémité 24 est formée d'une portée demi-circulaire qui relie les extrémités respectives des portées 22a, 22b. En fin de course, la pièce mâle 19 vient donc butée contre cette extrémité 24. De la sorte, l'amplitude du mouvement de pivotement vers l'avant du pied 5 par rapport à la base 1 lors de l'absorption d'énergie est limitée,

Selon l'invention, le perçage cylindrique 23 est débouchant et la pièce mâle 19 traverse le perçage 23. La pièce mâle 19 comporte une extrémité filetée 25 pour sa fixation dans un taraudage 26 de la base 1 du pied 5, et une tête de serrage 27 pour serrer la pièce femelle 21 entre cette tête 27 et la base 1 ou le pied 5. Ainsi, la pièce mâle 19 constitue également une vis de fixation de la pièce femelle 21 sur la base 1 ou le pied 5. Et la pièce mâle 19 est fixe et solidaire du pied 5 ou de la base 1. Bien évidemment, la fixation de la pièce femelle 21 ou par rapport à la base 1 par rapport au pied 5 par la pièce mâle 19 n'empêche pas les mouvements relatifs de cette pièce mâle 19 par rapport à l'évidement 20 de la pièce femelle 21.

Selon l'invention, la pièce mâle 19 comporte une bague extérieure 28 dont la surface extérieure 29 cylindrique de révolution vient coopérer avec les portées 22a, 22b de la lumière formant l'évidement 20 lorsque le dispositif 14 est actif, et le diamètre extérieur d de la pièce mâle 19 est le diamètre extérieur de la surface extérieure 29. Ainsi, on peut modifier aisément la valeur de ce diamètre extérieur et donc à la fois le seuil de déclenchement (c'est-à-dire ladite valeur prédéterminée de la décélération) du dispositif 14 d'absorption d'énergie et la quantité d'énergie absorbée lors du déplacement de la pièce mâle 19 dans l'évidement 20 c'est-à-dire lorsque le dispositif 14 d'absorption d'énergie devient actif. Dès lors, en fonction de l'utilisation du piètement, on choisira une bague extérieure 28 de diamètre extérieur d approprié.

Par ailleurs, la pièce femelle 21 est une plaque en matériau à haut module d'élasticité, notamment en acier. Selon l'invention, cette plaque est une plaque plane et l'évidement 20 s'étend selon un grand axe 30 de symétrie de cette plaque. Là encore, la forme et les dimensions données à l'évidement 20 et aux portées 22a, 22b dans l'absolu et par rapport aux parties pleines de la plaque permettant de faire varier le seuil de déclenchement et la capacité d'énergie absorbée. Par exemple, en faisant varier simplement l'épaisseur de la plaque constituant la pièce femelle 21, on fait varier la capacité d'énergie absorbée. Egalement, on peut jouer sur la largeur e de la lumière de l'évidement 20 et/ou sur la largeur des parties pleines de la plaque de part et d'autre de l'évidement 20.

Selon l'invention, la pièce femelle 21 est associée au pied 5 ou à la base 1 grâce à une vis 31 traversant un perçage débouchant 32 de la pièce femelle 31, et dont l'extrémité filetée vient coopérer avec un taraudage 33 du pied 5 ou de la base 1.

Dans le mode de réalisation représenté, la pièce femelle 21 est associée solidaire du pied 5 par la vis 31, et la pièce mâle 19 est associée solidaire de la base 1 à travers le perçage 23 de la pièce femelle 21. La plaque constituant la pièce femelle 21 s'étend à l'arrière entre le pied 5 et la base 1. Lorsqu'une décélération au delà d'une valeur prédéterminée est subie par le siège tendant à faire pivoter le pied 5 vers l'avant, la pièce femelle 21 solidaire du pied 5 est entraînée avec celui-ci et la pièce 19 pénètre dans la lumière de l'évidement 20 entre les portées 22a, 22b. De plus, la pièce femelle 21 subit également une légère flexion au niveau de sa fixation par la vis 31 au pied 5 comme représenté à la figure 2.

Comme on le voit à la figure 1, la plaque plane constituant la pièce femelle 21 s'étend au moins sensiblement dans la même direction que le bras arrière 33 de la base triangulaire 1, et l'axe de la pièce mâle 19 s'étend au moins sensiblement perpendiculairement à cette direction.

Les caractéristiques dimensionnelles et de forme des moyens 13, 14 d'absorption d'énergie pourront être déterminées par exemple par un calcul de structure, par l'homme du métier pour obtenir les valeurs souhaitées du seuil de déclenchement et de la capacité d'absorption d'énergie.

## Revendications

1. Piètement pour siège d'appareil de transport aérien comprenant une base triangulaire (1) définissant un ancrage avant (2), un ancrage arrière (3), et un sommet intermédiaire (4) surélevé, et un pied (5) associé par son extrémité supérieure (6) à la structure du siège et associé par son extrémité inférieure (7) à la base triangulaire (1), caractérisé en ce que le pied (5) est associé rigidement à la base (1) par des moyens (8) d'association rigide qui réalisent, en utilisation normale du siège, un maintien positif du pied (5) par rapport à la base (1) empêchant notamment tout pivotement du pied (5) vers l'avant ou vers l'arrière.

2. Piètement selon la revendication 1, caractérisé en ce que les moyens (8) d'association rigide du pied (5) à la base (1) comprennent des moyens (13, 14) d'absorption d'énergie actifs lorsque le siège subi une décélération tendant à faire pivoter le pied (5) vers l'avant au delà d'une valeur prédéterminée.

3. Piètement selon la revendication 2, caractérisé en ce que les moyens (13, 14) d'absorption d'énergie comprennent au moins une portion (15, 16) du pied (5) et/ou de la base (1) déformable plastiquement à partir d'une valeur prédéterminée de la décélération.

4. Piètement selon l'une quelconque des revendications 2 et 3, caractérisé en ce que les moyens (13, 14) d'absorption d'énergie comprennent au moins une portion (15, 16) de l'extrémité inférieure (7) du pied (5) déformable plastiquement.

5. Piètement selon l'une quelconque des revendications 2 à 4, caractérisé en ce que les moyens (13, 14) d'absorption d'énergie comprennent un dispositif d'absorption d'énergie (13) par flambage formé d'au moins une portion (15, 16) du pied (5) et/ou de la base (1).

6. Piètement selon l'une quelconque des revendications 2 à 5, caractérisé en ce que les moyens (13, 14) d'absorption d'énergie comprennent une portion arrière (16) déformable plastiquement en flexion et une portion avant (15) déformable par flambage.

7. Piètement selon la revendication 6, caractérisé en ce que le pied (5) et/ou la base (1) comporte une fenêtre transversale (18) ménagée au moins au voisinage de l'association du pied (5) à la base (1) pour former les portions (15, 16) avant et arrière.

8. Piètement selon l'une des revendications 6 et 7, caractérisé en ce que la portion avant (15) est constituée d'une membrure convexe (15) à convexité orientée vers l'avant.

9. Piètement selon l'une des revendications 6 à 8, caractérisé en ce que la portion arrière (16) est constituée d'une membrure (16) convexe à convexité orientée vers l'avant.

10. Piètement selon l'une des revendications 6 à 9, caractérisé en ce que la portion arrière (16) comporte un rétrécissement (17) déformable plastiquement en flexion réalisant un axe de pivotement horizontal transversal du pied (5) par rapport à la base (1) lorsque ladite valeur prédéterminée de la décélaration est dépassée.

11. Piètement selon l'une des revendications 2 à 10, caractérisé en ce que les moyens (13, 14) d'absorption d'énergie (14) comprenant un dispositif d'absorption d'énergie complémentaire rapporté sur et associé interposé entre le pied (5) et la base (1).

12. Piètement selon la revendication 11, caractérisé en ce que le dispositif d'absorption d'énergie (14) complémentaire est associé à l'arrière et au voisinage de l'extrémité inférieure (7) du pied (5).

13. Piètement selon l'une des revendications 11 et 12, caractérisé en ce que le dispositif d'absorption d'énergie (14) complémentaire comprend une pièce mâle (19) pénétrant à force avec déformation plastique dans un évidement (20) d'une pièce femelle (21), en ce que l'une des pièces femelle (21) ou mâle (20) est directement rapportée suret associée au pied (5), et en ce que l'autre pièce mâle (19) ou femelle (21) est directement rapportée sur et associéee à la base (1).

14. Piètement selon l'une des revendications 11 à 13, caractérisé en ce que la pièce mâle (19) a une forme extérieure globalement cylindrique de révolution, en ce que l'évidement (20) est constitué d'une lumière oblongue formant deux portées (22a, 22b) en regard prolongeant radialement un perçage cylindrique (23) dans lequel la pièce mâle (19) est normalement engagée, et en ce que le diamètre extérieur (d) de la pièce mâle (19) est supérieur à la largeur (e) de la lumière oblongue (20), de sorte qu'en action, le dispositif (14) d'absorption d'énergie absorbe de l'énergie par déformation plastique des parties (22a, 22b) écartées par l'introduction, entre elles, de la pièce mâle (19).

15. Piètement selon l'une des revendications 13 et 14, caractérisé en ce que l'évidement (20) comporte une extrémité (24) formant butée de fin de course pour la pièce mâle (19) limitant l'amplitude du mouvement du pied (5) par rapport à la base (1).

16. Piètement selon l'une des revendications 14 et 15, caractérisé en ce que le perçage cylindrique (23) est débouchant, et en ce que la pièce mâle (19) traverse le perçage (23) et comporte une extrémité filetée (25) pour sa fixation dans un taraudage (26) de la base (1) ou du pied (5), et une tête de serrage (27) pour serrer la pièce femelle (21) entre cette tête (27) et la base (1) ou le pied (5).

17. Piètement selon l'une de revendications 14 à 16, caractérisé en ce que la pièce mâle (19) comporte une bague extérieure (28) dont la surface extérieure (29) cylindrique de révolution vient coopérer avec les portées (22a, 22b) de la lumière lorsque le dispositif (14) est actif.

18. Piètement selon l'une des revendications 13 à 17, caractérisé en ce que la pièce femelle (21) est une plaque en matériau de haut module d'élasticitié, notamment en acier.

19. Piètement selon la revendication 18, caractérisé en ce que la pièce femelle (21) est une plaque plane.

20. Piètement selon l'une des revendications 18 et 19, caractérisé en ce que l'évidement (20) s'étend selon un axe (30) de symétrie de cette plaque.

21. Piètement selon l'une des revendications 13 à 20, caractérisé en ce que la pièce femelle (21) est associée au pied (5) ou à la base (1) par une vis (31) traversant un perçage débouchant (32) de cette pièce femelle (21).
